# EUROPÄISCHE PATENTANMELDUNG

(11) **EP 1 316 594 A1**
(43) Veröffentlichungstag der Anmeldung: **04.06.2003**
(21) Anmeldenummer: 02025597.2
(22) Anmeldetag: 18.11.2002
(51) Int. Cl.: C09D 177/02, C08G 18/71, G01N 21/77

(54) **Silangruppen enthaltende Polymere**

(30) Priorität: 28.11.2001 DE 10158149
(71) Anmelder: Bayer Aktiengesellschaft, 51368 Leverkusen (DE)
(72) Erfinder: Bumeister, Jens, Dr., 51061 Köln (DE); Diessel, Edgar, Dr., 51061 Köln (DE); Dorn, Ingmar, Dr., 50733 Köln (DE); Köhler, Burkhard, Dr., 51373 Leverkusen (DE)

(57) **Zusammenfassung**

Die Erfindung betrifft Silangruppen enthaltende Polymere und deren Verwendung sowie damit beschichtete Vorrichtungen und deren Verwendung.

## Beschreibung

Die Erfindung betrifft Silangruppen enthaltende Polymere und deren Verwendung sowie damit beschichtete Vorrichtungen und deren Verwendung.

Bio- oder Chemosensoren bestehen beispielsweise aus einem Erkennungselement und einem elektrischen oder optischen Signalwandler. Mit Hilfe von Bio- oder Chemosensoren kann die Anwesenheit eines Analyten qualitativ oder quantitativ nachgewiesen werden. Das Funktionsprinzip der Sensoren beruht auf der Erkennungsreaktion zwischen dem Erkennungselement und dem nachzuweisenden Analyten. Beispiele für Erkennungsreaktionen sind die Bindung von Liganden an Komplexe, die Komplexierung von Ionen, die Bindung von Liganden an (biologische) Rezeptoren, Membranrezeptoren oder Ionenkanäle, von Antigenen oder Haptenen an Antikörper, von Substraten an Enzyme, von DNA oder RNA an bestimmte Proteine, von Aptameren oder Spiegelmeren an ihre Targets, die Hybridisierung von DNA/RNA/PNA oder anderen Nukleinsäure-Analoga oder die Prozessierung von Substraten durch Enzyme. Das Erkennungselement wird beispielsweise auf der Oberfläche eines Signalwandlers kovalent oder nichtkovalent immobilisiert. Beispiele für Analyten sind DNA, RNA, PNA, Nukleinsäure-Analoga, Enzymsubstrate, Peptide, Proteine, potentielle Wirkstoffe, Medikamente, Zellen, Viren. Besipiele für Erkennungselemente sind DNA, RNA, PNA, Nukleinsäure-Analoga, Aptamere, Spiegelmere, Peptide, Proteine, Komplexbildner für Metalle/Metallionen, Cyclodextrine, Kronenether, Antikörper oder deren Fragmente, Anticaline, Enzyme, Rezeptoren, Membranrezeptoren, Ionenkanäle, Zelladhäsionsproteine, Ganglioside, Mono- oder Oligosaccharide.

Bio- oder Chemosensoren können in der Umweltanalytik, dem Nahrungsmittelbereich, der Human- und Veterinärdiagnostik, dem Pflanzenschutz und in der biochemischen Forschung eingesetzt werden, um Analyten qualitativ und/oder quantitativ zu bestimmen. Werden an die Oberfläche des Signalwandlers verschiedene Detektorelemente räumlich voneinander getrennt gebunden, so kann eine große Zahl von Erkennungsreaktionen mit einer zu untersuchenden Probe zeitgleich analysiert werden. Verwirklicht ist dies z. B. bei sogenannten DNA-Arrays, bei denen verschiedene DNA-Sequenzen (z. B. Oligonukleotide oder cDNAs) auf einem festen Träger (z. B. Glas) immobilisiert sind. Solche DNA-Arrays können mit optischen oder elektrischen Methoden ausgelesen werden und finden Anwendung in der Exressions-Profilierung, der Sequenzierung, dem Nachweis viraler oder bakterieller Nukleinsäuren, der Genotypisierung usw.

Die Detektion der Erkennungsreaktion bei Bio- oder Chemosensoren kann z. B. durch Anwendung optischer, elektrischer, mechanischer oder magnetischer Detektionsverfahren erfolgen, bei denen biologische Erkennungsmoleküle auf dielektrischen Oberflächen immobilisiert sind.

Optische Detektionsverfahren basieren z. B. auf dem Nachweis fluoreszenzmarkierter Biomoleküle an dielektrischen Oberflächen. Die Fluoreszenzanregung kann hierbei über planare optische Wellenleiter, Duveneck et al. US 5959292 (1999), Totalreflexion an Grenzflächen, Katerkamp DE 196 28 002, oder an der Oberfläche von Lichtleitfasern erfolgen, Hirschfeld US 4447546. Die Bindung eines Targetmoleküls an ein Detektormolekül, das auf einem Wellenleiter immobilisiert ist, kann aber auch labelfrei über die Veränderung des optischen Brechungsindex nachgewiesen werden: Gitterkoppler: Tiefenthaler et al., US 4815843, Kunz, US 5442169, Interferometer: Stamm et al., Sens. & Act. B 11, 177 (1993), Schipper et al., Anal. Chem. 70(6), 1192 (1998), Resonant Mirror: Cush et al., Biosensors & Bioelectronics 8, 347 (1993), Multilayered Grating Resonance: Yang et al., *Realtime Monitoring of small molecule-protein interaction by a Multilayered Grating Resonance (MGR) Biosensor,* Biosensors 2000, San Diego (2000). Ebenfalls labelfrei erfolgt der Nachweis, bei der Interferenzen an dielektrischen Filmen ausgenutzt wird: Reflektometrische Interferenzspektroskopie: Gauglitz et al., Sens. & Act. B 11, 21 (1993) oder Ellipsometrie: Striebel et al., Biosens. & Bioelectr. 9, 139 (1994). Eine alternative Methode ist die enzymatisch induzierte Filmbildung, die interferometrisch ausgewertet wird: Jenison, Clin. Chem. 47, 1894 (2001).

Eine neue Klasse von elektrischen Biosensoren beruht auf dem Nachweis von Analyten, die durch metallische Partikel, z. B. Nanopartikel markiert sind. Zur Detektion werden diese Partikel durch autometallographische Abscheidung soweit vergrößert, daß sie einen mikrostrukturierten Stromkreis kurzschließen. Dies wird durch eine einfache Gleichstrom-Widerstandsmessung demonstriert. Die grundlegenden Patente hierzu werden von Molecular Circuitry Inc. (MCI), King of Prussia, PA, USA gehalten (US 4,794,089; US 5,137,827; US 5,284,748). Die Detektion von Nukleinsäuren durch Gleichstrom-Widerstandsmessung wurde jüngst demonstriert (Möller et al., Langmuir 2001). Die Detektor-DNA wurde hier unter Verwendung eines Alklysilans immobilisiert. Bislang existiert kein Bericht über die Unterscheidung von DNA-Sequenzen, die sich nur durch eine Base in ihrer Sequenz unterscheiden, durch Gleichstrom-Widerstandsmessung. Die Unterscheidung von DNA-Sequenzen, die sich nur durch eine Base in ihrer Sequenz unterscheiden, durch eine Gold-markierte DNA-Detektor-Probe auf optischem Wege wurde hingegen jüngst beschrieben (Taton et al., Science 2000, 289, 1757-1760).

Feldeffekttransistoren können als elektronische Transducer z. B. für eine enzymatische Reaktion eingesetzt werden: Zayats et al. Biosens. & Bioelectron. 15, 671 (2000).

Als mechanische Transducer werden Schwingquarze beschrieben, bei denen die Veränderung der Resonanzfrequenz durch Massenbelegung erfolgt: Steinem et al. Biosens. & Bioelectronics 12, 787 (1997). In einem alternativen mechanischen Transducer werden mit Interdigitalstrukturen Oberflächenwellen angeregt, die durch Targetadsorption modifiziert werden: Howe et al., Biosens. & Bioelectron. 15, 641 (2000).

Werden die Targetmoleküle mit magnetischen Beads markiert, so kann die Erkennungsreaktion über den magnetischen Einfluß der Beads auf den Giant Magnetic Resistance (GMR) eines entsprechenden Widerstands detektiert werden: Baselt et al. Biosens. and Bioelectron. 13, 731 (1998).

Detektorelemente können kovalent oder nichtkovalent an die Oberfläche des Signalwandlers gekoppelt werden. Die kovalente Immobilisierung von Erkennungselementen wie z. B. DNA an Sensoroberflächen hat hinsichtlich der Stabilität, Reproduzierbarkeit und Spezifität der Kopplung entscheidende Vorteile gegenüber der nichtkovalenten Kopplung. Einen Überblick über Methoden zur Präparation DNA-beschichteter Oberflächen gibt S. L. Beaucage, Curr. Med. 2001, 8, 1213-1244.

Ein Beispiel für nichtkovalente Kopplung ist das Spotting von cDNA auf Glasträger, an die zuvor Polylysin adsorbiert wurde. Diese Methode ist sehr verbreitet bei der Herstellung von DNA-Microarrays. Durch Funktionalisierung von Oberflächen mit Silanen, z. B. Aminoalkylsilanen, kann eine Monolage von Aminogruppen kovalent auf die Sensoroberfläche aufgebracht werden. Die Aminogruppen können durch bifunktionelle Linker aktiviert werden, an die dann z. B. aminomodifizierte DNA kovalent gekoppelt werden kann. Alternativ kann die DNA geeignet aktiviert und anschließend an die mit Aminoalkylgruppen funktionalisierte Oberfläche gebunden werden. Dieses Verfahren ist z. B. in B. Joos, H. Kuster, R. Core, Anal. Biochem. 1997, 247, 96-101 beschrieben. Nachteil eines solchen Verfahrens ist jedoch die Tatsache, dass die maximal zu erreichende DNA-Dichte durch die verfügbare Monolage limitiert ist. Es besteht Bedarf an solchen Verfahren zur Funktionalisierung von Oberflächen, die es erlauben eine deutlich höhere Zahl von Detektorelementen pro Flächeneinheit zu immobilisieren, als dies bei einer Monolage möglich ist. Durch eine höhere Dichte von Detektorelementen werden das Signal/Rausch-Verhältnis sowie der dynamische Bereich des Sensors verbessert. Eine mögliche Lösung des dargestellten Problems ist der Aufbau Dendrimer-artiger Strukturen in einer mehrere Schritte umfassenden Synthese. Dieses Verfahren ist z. B. beschrieben in M. Beier, J. Hoheisel, Nucl. Acids Res. 1999, 27, 1970-1977. Als weiterer Lösungsweg wird z. B die Beschichtung von Goldoberflächen mit Thiolcarbonsäuren vorgeschlagen, die anschließend aktiviert und in wäßriger Lösung mit Poly-L-Lysin kovalent verknüpft werden (Frey, B. L., Corn, R. M. Anal. Chem. 1996, 68, 3187). Glasoberflächen können mit einer Schicht aus einem Polyacrylamid-Gel überzogen werden. Die freien Amidgruppen des Polymers können mit Hydrazin umgesetzt werden, was die Immobilisierung Aminomodifizierter Biomoleküle an die resultierenden Säurehydrazidgruppen ermöglicht Dieses Vefahren ist z. B. beschrieben in: Khrapko K. R. et al., FEBS Lett. 1989, 256, 118 sowie in Khrapko, K.R.et al., DNA Sequence 1991, 1, 375. Vor der Herstellung des Polyacrylamidgels an der Biochip-Oberfläche können Acrylamidgruppen über geeignet funktionelle Silane an die Oberfläche gebunden werden. Die Copolymerisation von N,N-Dimethylacrylamid und N-(5,6-Di-Oisopropyliden)hexylacrylamid in der Gegenwart von N,N,-methylen-bis-acrylamid und Ammoniumpersulfat an Acrylamido-silanisierten Glasträgern führt nach Entfernung der Schutzgruppen zu einem Aldehyd-funktionalisierten Gel, das mit aminofunktionalisierten Detektorelementen umgesetzt werden kann (Timofeev,E.N, Kochetskova, S. V., Mirzabekov, A.D., Florentiev, V. L., Nucl. Acids Res. 1996, 24, 3142). Ein einfacher Prozeß, der es erlauben würde eine Sensoroberfläche in einem Reaktionsschritt mit einem für die Biofunktionalisierung geeigneten Polymer kovalent zu beschichten, ist bisher nicht beschrieben.

In der Patentanmeldung EP 0596421 A1 der Firma Hoffmann-La Roche sind Silane der allgemeinen Form (R1R2R3)Si-X-Y und deren Verwendung zur Herstellung optischer Biosensoren beschrieben. Anspruch 3 beschreibt Y als Polymer aus der Gruppe der Oligovinylalkohole, Oligoacrylsäuren, Oligoacrylderivate, Oligoethylenglycole oder Polysaccharide. Ein Bezug zu silylierten Polyaminen wie z. B. Polylysin und deren Verwendung zur Herstellung elektrischer Biosensoren wird nicht hergestellt. Die Anmeldung EP 0596421 wurde zurückgezogen. In der Folge meldete die Firma Hoffmann-La Roche das europäische Patent EP 0653 429 A1 an, in dem kein Bezug zu Polymeren mehr hergestellt wird.

Hyperverzweigte Copolyamide wurden hergestellt, indem z. B. L-Lysin und ε-Caprolactam zur Reaktion gebracht wurden (WO 00/68298). Solche verzweigten Copolyamide fanden Verwendung zur Verbesserung der Eigenschaften thermoplastischer Materialien. Eine anschließende Silylierung dieser Polymere wurde nicht durchgeführt.

Die Silylierung von Poly-L-Lysin ist beschrieben in Beauregard, G.P. et al., J. Appl. Polym. Sci. 2001, 79, 2264-2271. Die Silylierung erfolgte mit Bis(trimethylsilyl)acetamid und führte zu einer Verbesserung der Löslichkeit des Polymers in organischen Lösemitteln. Trimethylsilylgruppen sind nicht geeignet, um eine kovalente Beschichtung mit einer oxidischen Oberfläche zu ermöglichen. Im Rahmen der Entwicklung pH sensitiver Drug Delivery-Systeme wird in WO 00/75164 die Silylierung von Polylysin mit 3-Aminopropyltriethoxysilan beschrieben. Bei dieser Silylierung erfolgt eine direkte Verknüpfung des Silans mit den ε-Aminogruppen von Polylysin unter Bildung eines Silazans, sodass ein auf diese Weise hergestelltes Polymer nicht zur kovalenten Beschichtung von Oberflächen verwendet werden kann.

Der Erfindung liegt die Aufgabe zugrunde, Oberflächen von Biosensoren derart zu modifizieren (beschichten), daß eine Anbindung von Detektorelementen, z. B. Nukleinsäuren möglich ist. Es sollte ein Verfahren bereitgestellt werden, das die kovalente, spezifische Anbindung von z. B. Nukleinsäuren an planare, z. B. aus Glas oder Siliziumdioxid bestehende Oberflächen ermöglicht. Die Detektorelemente sollten derart gebunden sein, dass insbesondere eine elektrische Detektion von Nukleinsäure-Targets auf unstrukturierten oder lateral strukturierten Oberflächen möglich ist. Insbesondere sollte die elektrische Detektion von Nukleinsäure-Targets aufgrund der spezifischen Kopplung der Detektor-Nukleinsäure so selektiv verlaufen, dass eine Unterscheidung von Nukleinsäure-Target-Sequenzen, die sich nur um eine Base in ihrer Sequenz unterscheiden, möglich ist. Das bereitzustellende Material zur Beschichtung von Sensoroberflächen muß weiterhin folgenden hohen Anforderungen genügen:
- Der Prozess der Beschichtung muß möglichst einfach sein, d. h. möglichst wenige Schritte umfassen. Im Idealfall sollte der Beschichtungsprozeß nur einen Schritt umfassen.
- Unter den Reaktionsbedingungen der Erkennungsreaktion muß die Immobilisierung der Erkennungselemente stabil sein.
- Die Funktionalität der Erkennungselemente muß auch nach der Immobilisierung noch vorhanden sein.
- Damit nur die spezifische Erkennungsreaktion durch den Signalwandler detektiert wird, muß jede Art von unspezifischer Bindung an die Oberfläche des Signalwandlers unterdrückt werden.
- Zur Erzielung eines hohen Signal/Rausch-Verhältnisses sowie einer hohen Selektivität von Erkennungsreaktionen muß gemäß dem Stand der Technik eine Oberflächendichte von gebundenen Erkennungselementen erreicht werden, die größer als eine Monolage ist.

Gegenstand der Erfindung ist ein hyperverzweigte, silanfunktionelles Polyamidurethan, erhältlich durch Kondensation von
A) 40 bis 100 Gew.-Teilen, vorzugsweise 60 bis 90 Gew.-Teilen, von einer oder mehreren Aminosäuren mit mindestens zwei Aminogruppen und einer Carboxygruppe und/oder deren Lactamen, wie z. B. L-Lysin, D-Lysin, a-L-Amino-ε-caprolactam, α-D-Amino-ε-caprolactam, 3,5-Diaminobenzoesäure, 2,4-Diaminobenzoesäure oder Gemischen dieser Monomere, vorzugsweise L-Lysin,
B) 0 bis 60 Gew.-Teilen, vorzugsweise 5 bis 20 Gew.-Teilen, von einer oder mehreren Aminosäuren mit einer Aminogruppe und einer Carboxygruppe und/oder deren Lactamen, wie z. B. ε-Caprolactam, Laurinlactam, 6-Aminocapronsäure, 11-Aminoundecansäure oder deren Gemische, vorzugsweise ε-Caprolactam, und
C) 0 bis 60 Gew.-Teilen, vorzugsweise 5 bis 20 Gew.-Teilen, von Diaminen der Formel (I),

   H₂N-R-NH₂ (I)

   in der
   - R: ein C₂-C₃₆-Alkylen- oder Cycloalkylenrest, ein C₈-C₂₀-Alkylenarylenrest oder ein Rest der Formel (II) ist,

   -R1-(-X-CH₂-C(R2)H-)ₙ-X-R1- (II)

   in der
   R1 ein Ethylen-, Propylen- oder Butylenrest ist,
   R2 eine Methylgruppe oder ein Wasserstoffatom, vorzugsweise ein Wasserstoffatom ist,
   X ein Sauerstoffatom oder eine NH-Gruppe ist und
   n eine natürliche Zahl von 1-100 ist,
   besonders bevorzugt 1,6-Diaminohexan, IPDA oder Bis(4-aminocyclohexyl)methan,
in der Schmelze, vorzugsweise bei Temperaturen von 160-260°C, in Gegenwart oder Abwesenheit von phosphorhaltigen Katalysatoren, vorzugsweise in Anwesenheit von 0,1 bis 1 Gew.-Teil Triphenylphosphit, und anschließende Umsetzung des Schmelzekondensationsproduktes aus den Bausteinen A und optional B und/oder C, vorzugsweise bei Temperaturen von 0-100°C, mit 1 bis 20 Gew.-%, vorzugsweise 5 bis 15 Gew.-%, bezogen auf das Schmelzekondensationsprodukt, eines Isocyanatosilans der Formel (III),

O=C=N-CH₂-CH₂-CH₂-Si(OR4)₃ (III)

in der
- R4: ein C₁-C₄-Alkylrest oder ein Methoxyethylrest ist,
wobei das Schmelzekondensationsprodukt und/oder das Isocyanatosilan in einem dipolar-aprotischen Lösungsmittel, wie z. B. DMF, DMA, NMP oder DMSO, vorgelöst werden kann.

Das erfindungsgemäße hyperverzweigte, silanfunktionelle Polyamidurethan eignet sich zur Beschichtung von Oberflächen, insbesondere oxidischen Oberflächen, wie sie z. B. als Sensoroberflächen für elektrische oder optische Signalwandler Verwendung finden. Die Beschichtung der Sensoroberfläche mit dem Polymer erfolgt in einem einzigen Reaktionsschritt.

Ein weiterer Gegenstand der Erfindung ist eine Vorrichtung mit mindestens einer mit erfindungsgemäßem Polyamidurethan beschichteten Oberfläche, beispielsweise Signalwandler, insbesondere elektrische, optische, magnetische und/oder mechanische Signalwandler, mit einer Beschichtung aus diesem Polymer. An die mit dem Polymer beschichteten Oberflächen werden biologische, chemische oder biochemische Erkennungselemente wie z. B. DNA, RNA, Aptamere, Rezeptoren etc. gebunden. Die (bio)funktionalisierten Oberflächen finden Anwendung in der Sensorik und sind wesentlicher Bestandteil von Bio- oder Chemosensoren z. B. als Biochips, die mit elektrischen oder optischen Methoden ausgelesen werden können. Die mit dem Polymer beschichteten oxidischen Oberflächen sind insbesondere dazu geeignet, Detektor-Nukleinsäuren kovalent an der Oberfläche zu immobilisieren. Die so immobilisierten sogenannten Detektor-Nukleinsäuren sind insbesondere geeignet, um durch elektrische Detektion solche Target-Nukleinsäuren voneinander zu unterscheiden, die sich nur um eine Base in ihrer Sequenz unterscheiden.

Eine der beiden oder beide Aminogruppen der Komponente A können bei der Schmelzekondensation unter Amidbildung zur Reaktion gebracht werden, wobei ein hyperverzweigtes Polyamid resultiert, dessen überschüssige Aminogruppen zum Teil mit dem Isocyanatosilan zu Harnstoffgruppen umgesetzt werden. Formel (IV) zeigt beispielhaft eine der möglichen Einheiten eines erfindungsgemäßen silanfunktionellen Polyamidurethans (* steht für die Fortsetzung des Polymers):

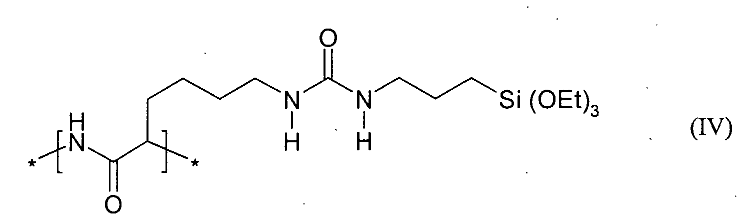

Die Aminogruppen des Polymers sind dazu geeignet, Erkennungselemente direkt oder mit Hilfe eines Crosslinkers kovalent, koordinativ oder über eine andere chemische Bindung an das Polymer zu binden. Die direkte Kopplung der Erkennungselemente kann vor oder nach der Beschichtung der Sensoroberfläche mit dem Polymer erfolgen. Als Crosslinker können alle dem Stand der Technik nach bekannten homo- oder heterobifunktionellen Amingruppen-reaktiven Verbindungen wie z. B. Bis-Isothiocyanate, Bis-Isocyanate, Bis-N-Hydroxysuccinimidester, Bis-Sulfo-N-Hydroxysuccinimidester, Bis-Imidsäureester usw. verwendet werden.

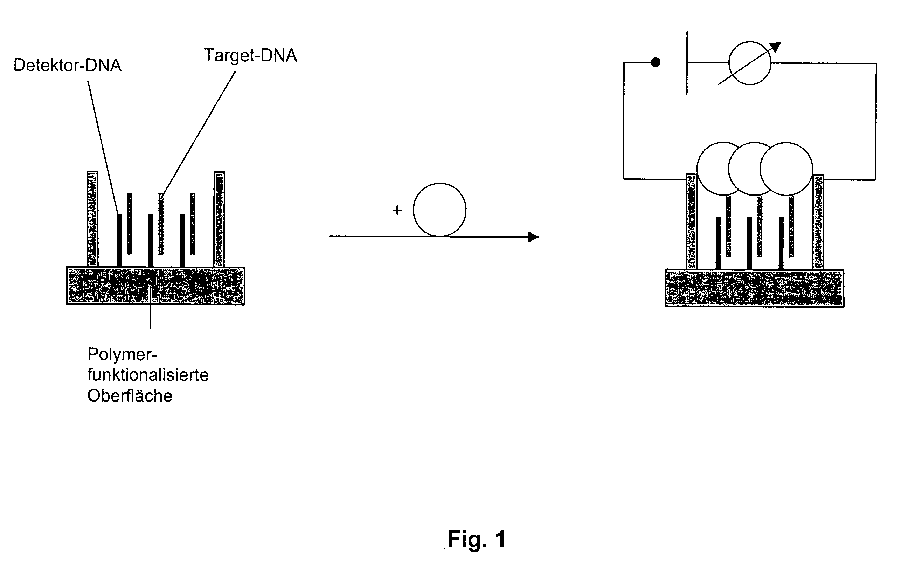

Das erfindungsgemäße hyperverzweigte silanfunktionelle Polyamidurethan besitzt gegenüber den dem Stand der Technik nach bekannten Verbindungen zur Beschichtung von Sensoroberflächen folgende Vorteile:
- Die Beschichtung von Sensoroberflächen mit dem silanfunktionellen Polyamidurethan erfolgt in einem einzelnen Reaktionschritt.
- Durch Beschichtung von Sensoroberflächen mit dem silanfunktionellen Polyamidurethan und anschließende Kopplung von Detektorelementen wie z. B. Nukleinsäuren wird eine besonders hohe Dichte an Detektorelementen erreicht.
- Die durch Beschichtung von Sensoroberflächen mit dem silanfunktionellen Polyamidurethan und anschließende kovalente Kopplung von Nukleinsäuren erreichte hohe Dichte an Detektorelementen ermöglicht es durch Gleichstro-Widerstandsmessung solche Nukleinsäure-Targets zu unterscheiden, die sich nur in einer Base hinsichtlich ihrer Sequenz unterscheiden.
- Das hyperverzweigte Polyamid ist im Gegensatz zu reinem Poly-Lysin, das nur alpha-Aminosäuren enthält, in organischen Lösemitteln löslich, wodurch eine Derivatisierung, z. B. mit Isocyanatosilanen, erst ermöglicht wird.
- Das silanfunktionelle Polyamidurethan ist aus organischen Lösungsmitteln applizierbar, was die Handhabung erleichtert. Dieses Lösungsverhalten ist auch deshalb von Vorteil, da bestimmte Silananker wie z. B. die Trialkoxysilanankergruppe nur in organischen Lösemitteln stabil sind. Poly-L-Lysin ist im Gegensatz dazu nur in Salzform in Wasser löslich, was eine Derivatisierung mit Isocyanatosilanen unmöglich macht. Daher kann es nur elektrostatisch an der Oberfläche verankert werden.
- Die silanfunktionellen, hyperverzweigten Polyamidurethane sind im Gegensatz zu Dendrimeren in einer Eintopfreaktion in zwei Schritten herstellbar, der Polykondensation und der anschließenden Umsetzung mit Isocyanatosilan. Die Bausteine sind technisch einfach verfügbar. Durch gezielte Bausteinwahl können die Eigenschaften im Gegensatz zu Biopolymeren auf einfache Weise variiert werden.
- Gegenüber Polysacchariden haben Polyamide den Vorteil, dass viele primäre Aminogruppen als reaktive Anknüpfungspunkte für die Folgechemie zur Verfügung stehen. Chitosan, das einzige gut verfügbare aminofunktionelle Polysaccharid, ist kaum in organischen Lösemitteln löslich, so dass ähnliche Nachteile wie bei Poly-L-Lysin auftreten. Bei den silanfunktionellen, hyperverzweigten Polyamidurethanen kann durch Wahl der Bausteine die Dichte der Amiogruppen gezielt eingestellt werden. Polysaccharide sind bezüglich OH-Gruppen überfunktionalisiert, wobei diese OH-Gruppen nach Silanisierung langsam zu Trialkoxygruppen umestern können, wodurch eine unerwünschte Vernetzung eintreten kann. Für die Folgechemie sind die OH-Gruppen weniger gut geeignet als Aminogruppen. Bei Silanen sind Si-O-Bindungen stabiler als Si-N-Bindungen, so dass die silanisierten Polyamidurethane mit Aminogruppenüberschuß vergleichsweise lagerstabil sind. Ferner unterstützen die Amidgruppen die Haftung an oxiidischen Oberflächen durch besonders stabile Wasserstoffbrückenbindungen, ein Vorteil gegenüber Polysachariden.
- Polymere an sich haben gegenüber monomolekularen Silanisierungsreagenzien den Vorteil der Multifunktionalität, wodurch die Haftung an Untergründen und auch die Anknüpfung weiterer Biomoleküle schon aus entropischen Gründen begünstigt ist.
Im folgenden wird die Erfindung anhand von einer Zeichnung (Fig. 1) und Ausführungsbeispielen näher erläutert.

**Fig. 1:** Schematischer Aufbau eines Biosensors mit Gleichstrom-Widerstandsmessung.

### Beispiele

### Beispiel 1: Herstellung eines silanfunktionellen Polyamidurethans

200g L-Lysin, 50g ε-Caprolactam, 50g 1,6-Diaminohexan und 0,5g TPP wurden bei 240°C zur Reaktion gebracht, wobei Wasser abdestillierte. Das resultierende Polyamid wurde im Verhältnis 8:1 mit NMP verdünnt. 9g des Polymers wurden zur Silanisierung 2h unter N₂-Atmosphäre mit 0,1g Triethoxysilylpropylisocyanat bei RT (Raumtemperatur = ca. 20°C) umgesetzt, wobei das Silan über Urethangruppen mit den Aminogruppen des Polyamids reagiert.

### Beispiel 2: Beschichtung von Oberflächen mit einem silanfunktionellen Polyamidurethan

Strukturierte oder unstrukturierte Chips aus Glas oder oxidiertem Silizium wurden 30 min mit Argon-induziertem Plasma bei Normaldruck behandelt und anschließend 5 min auf 80°C erhitzt. Eine 1%ige Lösung des silanfunktionellen Polyamidurethans in einem Gemisch von Aceton/DMF/Wasser (Volumenverhältnis: 7,5:2:0,5 v/v/v) wurde 15 min bei RT mit den gereinigten Chips inkubiert. Nach der Funktionalisierung wurden die Oberflächen mit Aceton gewaschen und anschließend 45 min bei 110°C getrocknet.

### Beispiel 3: Kopplung von Detektor-Nukleinsäuren an funktionalisierte Oberflächen

Detektor-DNA-A (5'-Amino-TTT TTT TTT CCA TTA GAC ATA ACC) und Detektor-DNA-G (5'-Amino-TTT TTT TTT CCA TTG GAC ATA ACC) wurden in Phosphatpuffer pH 7,2 gelöst und jeweils mit 0,1M Bis-sulfo-succinimidyl-suberat (BS3) 10 min bei RT inkubiert. Durch Verdünnung mit Phosphatpuffer wurde die Reaktion abgebrochen. Die Reinigung der Detektor-DNA's erfolgte durch Chromatographie auf einer NAP-10-Säule (Pharmacia). Die gereinigten Detektor-DNA's wurden in Volumina von z. B. 25 µl auf die silanisierten Oberflächen aufgebracht und über Nacht bei RT inkubiert. Die resultierenden DNA-Chips wurden mit 1% Ammoniumhydroxid sowie Wasser gewaschen und anschließend bei RT getrocknet. Durch Inkubation mit 0,4mg/ml BS3 in 0,1M Phosphatpuffer pH 7,2 wurden die nicht umgesetzten Aminogruppen auf der Chipoberfläche blockiert.

### Beispiel 4: Durchführung von DNA-Hybridisierungsreaktionen und Goldmarkierung

Auf den mit Polymer und Detektor-DNA beschichteten strukturierten oder unstrukturierten Oberflächen wurden nun Hybridisierungsreaktionen durchgeführt, wobei alle vier möglichen Kombinationen untersucht wurden: Detektor-DNA-A + Target-DNA-T (5'-Biotin-ATT CCC GGT TAT GTC TAA TGG GTG CAT), Detektor-DNA-A + Target-DNA-C (5'-Biotin-ATT CCC GGT TAT GTC CAA TGG GTG CAT), Detektor-DNA-G + Target-DNA-C sowie Detektor-DNA-G + Target-DNA-T (kurz: AT/AC/GC/GT). Hierzu wurden 10-7M Lösungen der jeweiligen Target-DNA in Tris-Puffer pH 7,2 mit dem Chip für 3h bei 42°C inkubiert. Anschließend wurde mit Tris-Puffer gewaschen. Die hybridisierten Target-DNA's wurden 1h bei RT mit einer Lösung von Streptavidin-Gold (Durchmesser der Goldpartikel 25 nm, Fa. Aurion, Niederlande) inkubiert. Die Chips wurden mit Wasser gewaschen und anschließend bei RT getrocknet. Die Gold-markierten Nukleinsäuren wurden mit der Enhancer-Lösung der Fa. Biocell (Biocell L15) 3x für 15 min bei RT behandelt und anschließend getrocknet.

### Beispiel 5: Gleichstrom-Widerstandsmessung an Gold-markierten Nukleinsäure-Targets

Die Gleichstrom-Widerstandsmessung der enhancten Chip-Oberflächen kann entweder zwischen extern aufgesetzten oder aber zwischen aufgedampften Goldelektroden (strukturierte Oberflächen) erfolgen. Die Gleichstrom-Widerstandsmessung zwischen extern aufgesetzten Elektroden zeigte, dass im Falle der "passenden" Kombinationen GC und AT über eine Distanz von 80 µm Widerstände < 5kΩ gemessen wurde, während die Kombinationen GT und AC selbst über eine Distanz von 10 µm Widerstände > 100 MΩ zeigten. Bei der Gleichstrom-Widerstandsmessung zwischen aufgedampften Elektroden zeigte sich, dass bei einem Elektrodenabstand von 20 µm im Falle der Kombinationen GC und AT Widerstände < 5 kΩ gemessen wurde, während für die Kombinationen AC und GT bis zu einem Elektrodenabstand von 10 µm Widerstände > 100 MQ gemessen wurden.

## Patentansprüche

1. Hyperverzeigtes, silanfunktionelles Polyamidurethan, erhältlich durch Kondensation von
A) 40 bis 100 Gew.-Teilen von einer oder mehreren Aminosäuren mit mindestens zwei Aminogruppen und einer Carboxygruppe und/oder deren Lactamen,
B) 0 bis 60 Gew.-Teilen von einer oder mehreren Aminosäuren mit einer Aminogruppe und einer Carboxygruppe und/oder deren Lactamen und
C) 0 bis 60 Gew.-Teilen von Diaminen der Formel (I),
H₂N-R-NH₂ (I)
in der
R einen C₂-C₃₆-Alkylen- oder Cycloalkylenrest, einen C₈-C₂₀-Alkylenarylenrest oder einen Rest der Formel (II) bedeuten,
-R1-(-X-CH₂-C(R2)H-)ₙ-X-R1- (I)
in der
R1 ein Ethylen-, Propylen- oder Butylenrest ist,
R2 eine Methylgruppe oder ein Wasserstoffatom,
X ein Sauerstoffatom oder eine NH-Gruppe ist und
n eine natürliche Zahl von 1 bis 100 ist,
in der Schmelze und anschließende Umsetzung des Schmelzekondensationsproduktes mit 1 bis 20 Gew.-%, bezogen auf das Schmelzekondensationsprodukt, eines Isocyanatosilans der Formel (III),
O=C=N-CH₂-CH₂-CH₂-Si(OR4)₃ (II)
in der
R4 ein C₁-C₄-Alkylrest oder ein Methoxyethylrest ist.

2. Verwendung des Polyamidurethans gemäß Anspruch 1 zur Beschichtung von Oberflächen.

3. Verwendung gemäß Anspruch 2, **dadurch gekennzeichnet, dass** das Polyamidurethan zur Beschichtung oxidischer Oberflächen verwendet wird.

4. Vorrichtung mit mindestens einer mit Polyamidurethan gemäß Anspruch 1 beschichteten Oberfläche.

5. Vorrichtung gemäß Anspruch 4, **dadurch gekennzeichnet, dass** die Vorrichtung ein Signalwandler, insbesondere ein optischer, elektrischer, mechanischer und/oder magnetischer Signalwandler, ist.

6. Vorrichtung gemäß Anspruch 4 oder 5, **dadurch gekennzeichnet, dass** eine oder mehrere Detektor-Nukleinsäuren und/oder einen oder mehrere Antikörper kovalent an das Polyamidurethan gebunden sind.

7. Vorrichtung gemäß Anspruch 6, **dadurch gekennzeichnet, dass** ein oder mehrere Detektor-Nukleinsäuren an das Polyamidurethan gebunden sind.

8. Vorrichtung gemäß Anspruch 4, **dadurch gekennzeichnet, dass** die Vorrichtung ein Array, insbesondere ein DNA-Array oder ein Protein-Array, ist.

9. Verwendung einer Vorrichtung gemäß Anspruch 7 für die Unterscheidung solcher Nukleinsäuren, die sich nur durch eine Base in ihrer Sequenz unterscheiden.

10. Verwendung gemäß Anspruch 9, **dadurch gekennzeichnet, dass** die Unterscheidung der Nukleinsäuren durch Gleichstrom-Widerstandsmessung erfolgt.
